# EUROPEAN PATENT SPECIFICATION

(11) **EP 3 977 854 B1**
(45) Date of publication and mention of the grant of the patent: **04.12.2024**
(21) Application number: 21200599.5
(22) Date of filing: 01.10.2021
(51) Int. Cl.: A01N 1/02

(54) **EX VIVO ORGAN PERFUSION SYSTEM**
SYSTEM ZUR EX VIVO PERFUSION EINES ORGANS
SYSTÈME DE PERFUSION D'ORGANE EX VIVO

(30) Priority: 02.10.2020 IT 202000023308
(43) Date of publication of application: 06.04.2022
(73) Proprietor: Aferetica S.r.l., 40138 Bologna (IT)
(72) Inventor: ATTI, Mauro, 40138 BOLOGNA (IT)
(74) Representative: Studio Torta S.p.A.

(56) References cited:
- WO-A1-2020/192513
- WO-A2-2004/089235
- CN-A- 110 178 835
- CN-A- 110 583 620
- CN-A- 111 657 262
- SHEN FEI ET AL: "Design and Implementation of a Hypothermic Machine Perfusion Device for Clinical Preservation of Isolated Organs", SENSORS, vol. 17, no. 6, 1 June 2017 (2017-06-01), pages 1256, XP055820570, DOI: 10.3390/s17061256
- NOTIZIARIO CHIMICO FARMACEUTICO (NCF): "Sistema integrato per la preparazione di organi destinati al trapianto", 19 July 2018 (2018-07-19), XP055820379, Retrieved from the Internet <URL:https://www.notiziariochimicofarmaceutico.it/2018/07/19/sistema-integrato-per-la-preparazione-di-organi-al-trapianto/> [retrieved on 20210701]

## Description

### TECHNICAL FIELD

The present invention concerns a thermoregulation system of a perfusion liquid for an ex vivo perfusion system of an organ and relative ex vivo perfusion system of an organ. In particular and without any loss of generality, reference is made in the following to a system for ex vivo perfusion for liver or for kidney to be transplanted in patients with degenerative liver or kidney pathologies.

### PRIOR ART

As is known, the transplant of organs, such as liver and kidneys, represents the main solution for treating patients affected by degenerative pathologies, in particular with acute evolution (for example, kidney and/or liver pathologies, such as chronic kidney failure and acute or chronic liver disease).

Currently, organ transplant is widely used, since it is effective and has significant advantages such as, for example, functional recovery of the transplanted organ and improved quality of life for the transplant patient. However, there is a considerable gap between the low number of organs actually transplantable (namely, organs from suitable donors) and the ever-increasing number of patients requiring an organ transplant.

Due to the above-mentioned gap, in recent years also organs coming from non-standard or marginal donors (Expanded Criteria Donors, ECD), namely organs previously considered critical and unsuitable for transplantation, have been increasingly considered as effectively transplantable organs. In particular, organs coming from marginal donors comprise organs coming from: Non Heart Beating Donors (NHBD) or Donation after Cardiac Death (DCD), with death declared according to cardiac criteria; elderly donors (namely, aged over sixty); and from donors aged under sixty and with previous diseases (for example, diabetes mellitus, hypertension and kidney failure) or with infectious diseases (for example, hepatitis and HIV).

One problem associated with the use of the above-mentioned organs from marginal donors, in particular from non heart beating donors, is the high percentage of post-transplant complications, deriving from an additional warm ischemia period to which the organs are subject during the period of confirmation of death. In detail, these complications are aggravated by the fact that the death of a non heart beating donor must be confirmed by continuous electrocardiographic recording for a No Touch Period; in particular, under Italian law, said confirmation period is at least equal to twenty minutes and is added to the time taken to reach cardiac arrest and the time required for re-perfusion of the abdominal organs with extracorporeal life support. In order to restore normal circulation of the organ of interest, the latter undergoes a reperfusion phase (namely, a phase in which the blood is recirculated in the organ), necessary to restore organ functionality and protect it from the absence of spontaneous circulation. However, this reperfusion can aggravate the damage caused by the previous additional warm ischemia period; in particular, the reperfusion phase can determine a delayed functional recovery, acute rejection and chronic dysfunction of the organ once it has been transplanted in the patient.

In short, the above-mentioned organs from marginal donors are considered a high-risk category, since they have a greater probability of dysfunction in the immediate post-transplantation period and greater risk of loss of graft.

Known solutions offer systems able to at least partly solve the problems connected with the above-mentioned organs from marginal donors. In particular, the known solutions use ex vivo perfusion systems that preserve the organs from a marginal donor in a dynamic and continuous manner, therefore limiting damage due to the above-mentioned problems.

As is known, the above-mentioned perfusion systems allow preservation of the organ to be transplanted by means of perfusion, which resumes and simulates the physiological perfusion of the organ through the blood vessels of the latter by means of a solution, defined as perfusion liquid, characteristic for each organ to be transplanted.

The operating modes of a perfusion system of a known type are typically defined according to the temperature of the perfusion liquid and are typically classified as: hypothermic mode (Hypothermic Machine Perfusion, HMP), in which the temperature of the perfusion liquid is comprised between 0°C and 4°C; subnormothermic mode (Subnormothermic Machine Perfusion, SMP), in which the temperature of the perfusion liquid is comprised between 20°C and 25°C; and normothermic mode (Normothermic Machine Perfusion, NMP), in which the temperature of the perfusion liquid is approximately equal to 37°C.

In the following, reference is made mainly to perfusion methods alternatively of hypothermic or normothermic type.

The hypothermic perfusion method can be advantageously used to preserve the organ considered, slowing down the metabolism thereof and maintaining it protected from any ischemic events. The normothermic perfusion method can be advantageously used for preservation of the organ in physiological-like conditions, with the need to provide appropriate quantities of oxygen and nutrients for correct maintenance of the organ.

In recent years the normothermic method has proved to be particularly advantageous, in particular when perfusion of an organ to be transplanted (typically coming from a non heart beating donor) in a substantially physiological manner is desired, therefore maintaining it vital and functional, significantly reducing the damage caused by the additional warm ischemia period and improving the post-transplantation survival period thereof; furthermore, the perfusion liquid in normothermic mode contains nutrients, oxygen and molecules transported by the latter (in particular by the red blood cells) .

Known systems and methods for the ex vivo perfusion of kidneys and liver are now described, without limiting the present description to these organs. In particular, in the following, both hypothermic and normothermic ex vivo kidney and liver perfusion systems and methods are considered. In addition, in both types of perfusion, the perfusion liquid is thermoconditioned.

In the case of renal perfusion, the perfusion liquid is perfused to the organ through the renal artery; in particular, following vascularization of the organ, the perfusion liquid is distributed in the renal circulation and is drained through the renal venous circulation.

The operating conditions of the above-mentioned perfusion, in particular the pressure and flow of the perfusion liquid, are defined in such a way as to respect the anatomo-functional characteristics of the kidney and respond to the clinical and operational needs of the above-mentioned perfusion. In particular, in the case of hypothermic perfusion, the pressure of the perfusion liquid is comprised, for example, between 20 mmHg and 40 mmHg; differently, in the case of normothermic perfusion, the pressure of the perfusion liquid is comprised between 75 mmHg and 80 mmHg. Furthermore, it should be noted that the normothermic method allows evaluation of the vitality and functionality of the organ, for example by considering the quantity of urine produced during the ex vivo perfusion. Examples of devices for kidney perfusion are Kidney Assist and Kidney Assist Transport by Organ Assist, RM3 by Waters Medical Systems and LifePort Kidney Transporter 1.0 and 1.1 by Organ Recovery.

In the case of liver perfusion, the perfusion can be carried out solely through the hepatic portal vein (single mode) or jointly by means of the hepatic artery (dual mode); in both cases, following vascularization of the liver, the perfusion liquid is distributed in the hepatic circulation and drained by means of the suprahepatic venous system. In greater detail, in the single mode, the organ perfusion is carried out by selective cannulation of the hepatic portal vein; differently, in the dual mode, the perfusion is performed by cannulating both the hepatic portal vein and the hepatic artery, so as to increase the quantity of oxygen supplied to the vascular system responsible for blood supply of the liver bile ducts, thus limiting the probabilities of ischemic death of the biliary epithelial cells after liver transplant. Furthermore, similarly to the discussion of renal perfusion, hepatic perfusion is performed in operating conditions that respect the anatomo-functional characteristics of the liver and respond to the clinical and operational needs of the above-mentioned perfusion. In further detail, for dual mode hypothermic hepatic perfusion, the pressure of the perfusion liquid is comprised between 20 mmHg and 30 mmHg on the hepatic artery and between 3 mmHg and 13 mmHg on the hepatic portal vein; differently, for dual mode normothermic hepatic perfusion, the pressure of the perfusion liquid is comprised between 50 mmHg and 100 mmHg for the hepatic artery and between 3 mmHg and 10 mmHg for the hepatic portal vein. Furthermore, the flow of the perfusion liquid in the hepatic artery and in the hepatic portal vein is comprised between 150 mL/min and 700 mL/min and comprised between 950 mL/min and 1750 mL/min respectively. Similarly to what was described with reference to renal perfusion, perfusion of the liver allows evaluation of the vitality and functionality of the liver itself, and the quantity of bile produced during ex vivo perfusion of the liver itself. Examples of liver perfusion devices are Liver Assist by Organ Assist, Waves by Waters Medical Systems, LifePort Liver Transporter by Organ Recovery and Metra by OrganOx.

Further known solutions offer perfusion systems that allow both renal and hepatic perfusion. Examples of perfusion systems of the above-mentioned type are Airdrive by Oxiplenish B.V., Vivian ^{®} by Transplant Biomedicals and VitaSmart by Medica.

However, the above-mentioned known systems have some drawbacks.

In particular, the above-mentioned known systems employ thermoregulation methods that do not allow a user to decide to operate in different operating modes; in other words, the thermoregulation systems of the known systems allow operation only in hypothermic, subnormothermic or normothermic mode, without the possibility of changing operating mode in a dynamic manner during treatment of the organ.

In addition, in the above-mentioned known systems, the organ is typically housed in a container together with the perfusion liquid and ice, the latter designed to lower the temperature of the perfusion liquid so as to operate in the desired mode (hypo-, subnormo- or normothermic); in particular, here, the organ is wrapped, for example, in a sterile protection and is both immersed in the perfusion liquid and, therefore, in contact with the ice.

Firstly, the use of ice is disadvantageous, since its melting causes a continuous increase and decrease in the temperature of the perfusion liquid, namely it does not allow to maintain a practically fixed or variable operating temperature according to the indications of the user. Furthermore, since the ice is in contact with the organ to be perfused, the latter will be significantly influenced by the temperature variations due to melting of the ice, also causing possible damage to the same which could invalidate the possibility of transplantation.

In addition, in further known ex vivo perfusion systems, the thermoregulation can be performed by means of thermoregulation systems that are designed to modify the temperature of the perfusion liquid by placing the latter in contact with further liquids for thermoregulation of said perfusion liquid; this situation occurs, for example, in known thermoregulation systems based on heat exchangers. However, the contact between the thermoregulation liquid and the perfusion liquid can lead to contamination of the perfusion liquid due to the development of micro-organisms such as bacteria which can damage the organ during the perfusion process.

"Design and Implementation of a Hypothermic Machine Perfusion Device for Clinical Preservation of Isolate Organs" by Shen Fei et al. in Sensors (Basel), 2017, 17(6), 1256, discloses a low-cost hypothermic machine perfusion (HMP) device designed and implemented to maintain suitable preservation surroundings and extend the survival life of isolated organs. The temperature control equipment of the device comprises a compressor, a heat bar and a controllable valve, after which water can reach a thin aluminium container around the stored organ and adjust the organ temperature by heat conduction through the metallic material.

### DISCLOSURE OF THE INVENTION

The object of the present invention is to make available a thermoregulation system of a perfusion liquid and a relative ex vivo perfusion system that overcome the drawbacks of the known art.

According to the present invention an ex vivo perfusion system of an organ is provided, as defined in claim 1.

The dependent claims describe preferred embodiments of the present invention forming an integral part of the present description.

### BRIEF DESCRIPTION OF THE DRAWINGS

For a better understanding of the present invention, a preferred embodiment thereof is now described, purely by way of nonlimiting example, with reference to the attached drawings, in which:
- Figure 1A is a perspective view with transparent parts of an ex vivo perfusion system of an organ according to the present invention;
- Figure 1B shows a sectional view of an electromedical perfusion unit of the perfusion system of Figure 1A;
- Figure 2A shows in exploded view a receptacle couplable to the electromedical perfusion unit forming part of the perfusion system of Figures 1A-1B according to an embodiment;
- Figure 2B shows in exploded view a receptacle couplable to the electromedical perfusion unit forming part of the perfusion system of Figures 1A-1B according to another embodiment, alternative to the embodiment of Figure 2A;
- Figure 3A shows in perspective view a thermoregulation system of the electromedical perfusion unit of the perfusion system of Figures 1A-1B;
- Figure 3B shows a wiring diagram of the cooling unit of the thermoregulation system of Figure 3A;
- Figure 4 shows schematically a kidney perfusion mode of the system of Figures 1A-1B; and
- Figure 5 shows schematically a liver perfusion mode of the system of Figures 1A-1B.

### PREFERRED EMBODIMENTS OF THE INVENTION

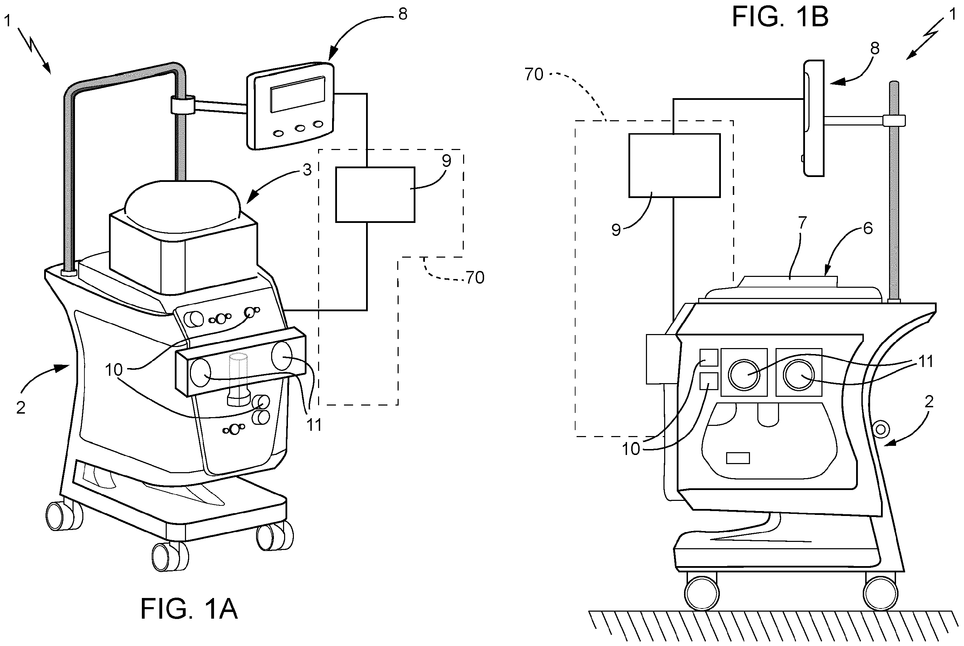

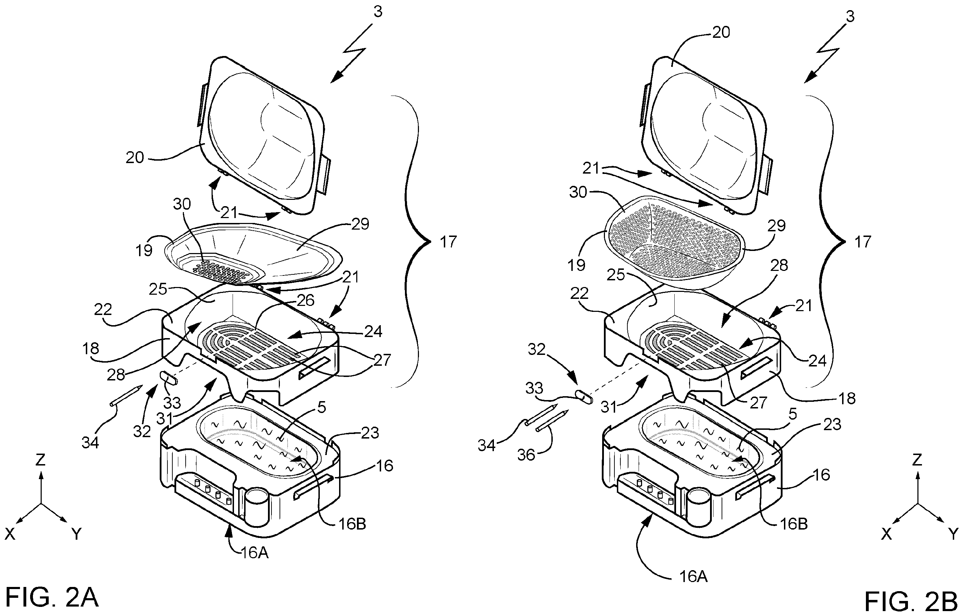

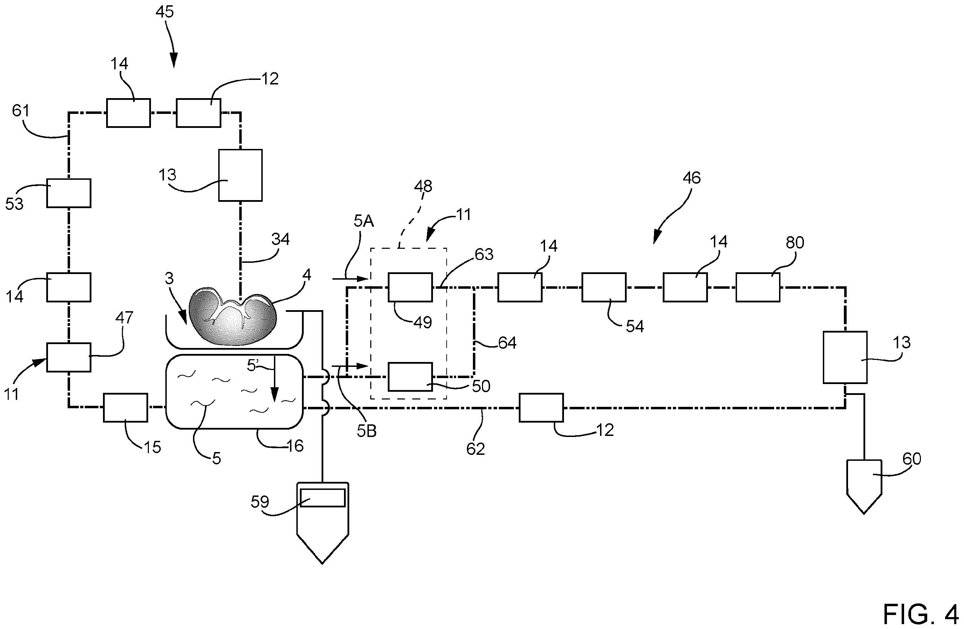

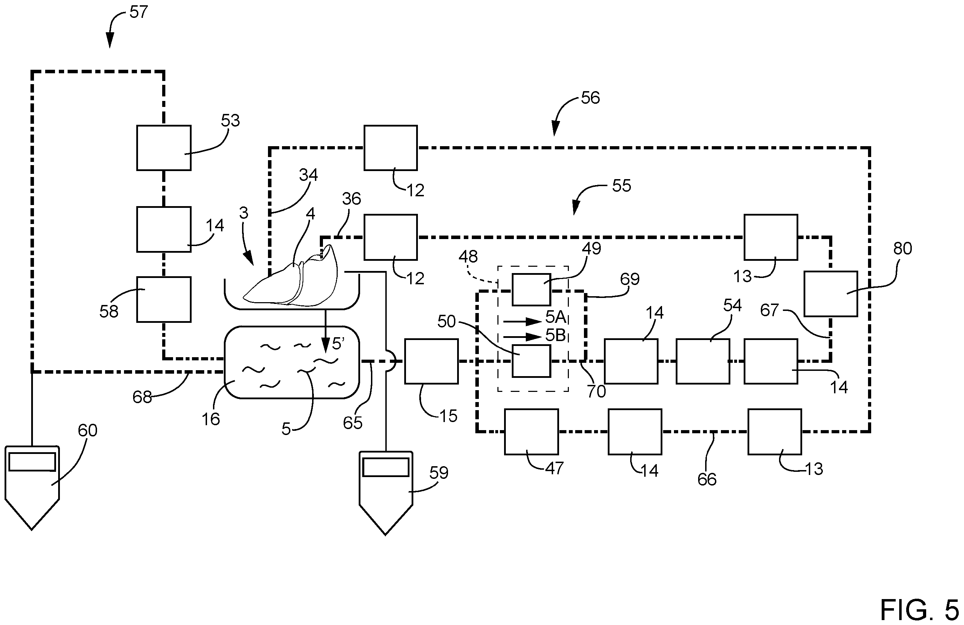

Figures 1A-1B show an ex vivo perfusion system (in the following defined as system) 1, which comprises:
- an electromedical perfusion unit 2 (shown in section in Figure 1B); and
- a container 3 (shown transparent in Figure 1A and in greater detail in Figures 2A-2B), coupled to the electromedical perfusion unit 2 and designed to contain, in use, an organ 4, for example a kidney or a liver (shown in Figures 4 and 5 respectively), to be perfused with a perfusion liquid 5 (for example, a liquid containing nutritional substances, red blood cells and oxygen, shown schematically in Figures 2A-2B and in Figures 4 and 5).

In the present embodiment, the container 3 has, for example, a quadrangular shape in a top view (for example, rectangular with rounded corners, as shown in Figures 2A and 2B) and is configured to contain, in use, the perfusion liquid 5.

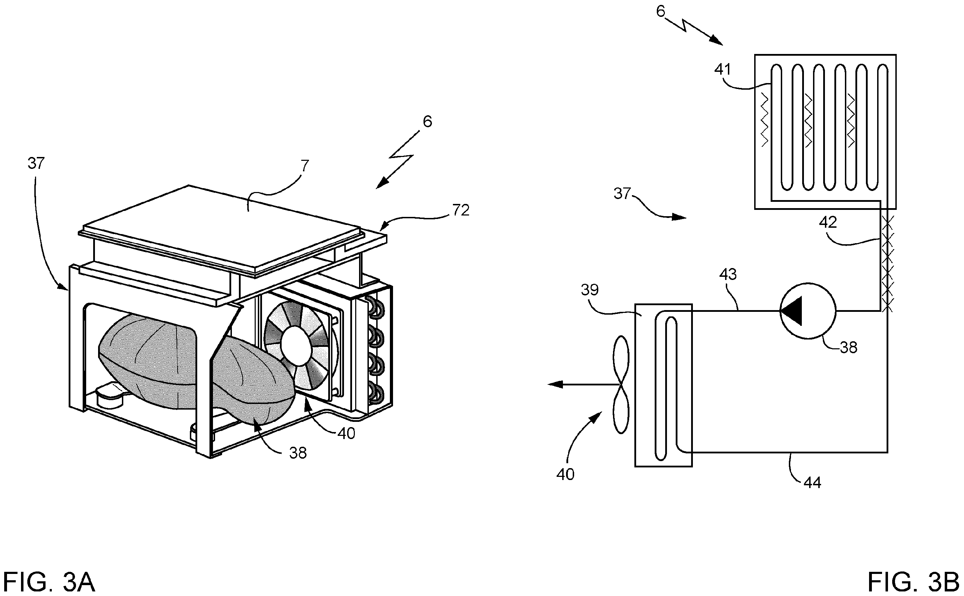

The electromedical perfusion unit 2 comprises a thermoregulation system 6 (shown in detail in Figures 3A and 3B). The thermoregulation system 6 comprises a thermoregulation plate 7, designed to carry the container 3 and to heat or cool thanks to the thermoregulation system 6 to heat or cool the perfusion liquid 5 contained in the container 3. Again with reference to Figures 1A-1B, the system 1 furthermore comprises a user interface 8, for example a touchscreen display, coupled to a control unit 9. In particular, the control unit 9 is coupled to the electromedical perfusion unit 2; the user interface 8 is configured to show information, which is received from the control unit 9, relative to the perfusion operation (also known as reconditioning) of the organ 4 when the system 1 is in use. In the embodiment of Figures 1A and 1B, the control unit 9 is integrated in the electromedical perfusion unit 2.

The system 1 furthermore comprises a control system 70, which includes:
- a plurality of sensors 10, designed to detect respective physical quantities relative to the perfusion liquid 5 and, therefore, to the perfusion mode of the organ 4 when the system 1 is in use; and
- a plurality of pumps 11, designed to perform perfusion of the organ 4 housed in the container 3 when the system 1 is in use. With reference to Figures 4 and 5, the plurality of sensors 10 comprises:
   - temperature sensors 12, designed to detect a temperature T of the perfusion liquid 5 when the system 1 is in use;
   - flow and air presence sensors 13, designed to detect a flow Φ of the perfusion liquid 5, and the presence of air bubbles in the same perfusion liquid 5, when the system 1 is in use;
   - pressure sensors 14, designed to detect a pressure p of the perfusion liquid 5 when the system 1 is in use and check that perfusion of the organ 4 takes place in a substantially physiological manner; and
   - level sensors 15, designed to detect the quantity of perfusion liquid 5 in the container 3 when the system 1 is in use.

In particular, the flow and air presence sensors 13 are coupled to electroclamps (not shown) designed to block the flow of the perfusion liquid 5 towards the organ 4 in critical situations such as, for example, gas embolism due to the entry of air into the organ 4 with consequent deterioration of the preservation conditions; furthermore, the electroclamps are configured to define perfusion liquid flow paths according to the presence/absence of air bubbles in the perfusion liquid 5.

In addition, the level sensors 15 are configured to check that the quantity of perfusion liquid 5 does not drop below a threshold value, so as to avoid the container 3 emptying and, at the same time, that there is no accidental entry of air during perfusion of the organ 4 (namely, that gas embolism is avoided and, therefore, damage to the organ 4). It should be noted that if the level sensors 15 are not working (namely, they do not warn the user, for example by means of an alarm sound, of excessive reduction of the quantity of perfusion liquid 5 in the container 3) and, therefore, allow air flow during perfusion of the organ 4, the flow and air presence sensors 13 are configured to compensate for any malfunctions, thus avoiding deterioration of the organ 4. In other words, the level sensors 15 and the flow and air presence sensors 13 cooperate for correct performance of the perfusion process of the organ 4. With reference to Figures 2A-2B, the container 3 comprises:
- a reservoir 16, couplable to the thermoregulation plate 7 of the electromedical perfusion unit 2 and configured to contain the perfusion liquid 5; and
- an upper portion 17, fluidically and physically couplable to the reservoir 16 and designed to contain the organ 4 to be perfused.

The upper portion 17 is carried by the reservoir 16 so that the organ 4 is arranged at a distance from the surface of the perfusion liquid 5 contained in the reservoir 16, or, as shown in Figures 4 and 5, so that the organ 4 is arranged in a raised position with respect to the perfusion liquid 5; in other words, the organ 4 is not immersed in the latter. Furthermore, the reservoir 16 has a base 16A, configured to fix the container 3 to the electromedical unit 2, and a conductive base 16B preferably made of conductive material (for example, metal) and thermally coupled to the thermoregulation plate 7; furthermore, the conductive base 16B is configured to contain the perfusion liquid 5. In this way, the reservoir 16, in particular the perfusion liquid 5, is configured to be heated or cooled by thermal conduction by the thermoregulation plate 7 when the thermoregulation system 6 is in use.

Again with reference to Figures 2A and 2B, the upper portion 17 has here a quadrangular shape in a top view (for example, rectangular with rounded corners) and is made, for example, of acrylonitrile-butadiene-styrene (ABS); furthermore, the upper portion 17 comprises:
- a receptacle 18, couplable to the reservoir 16 and is in fluid communication with the latter when coupled to the reservoir 16;
- a mesh 19, couplable to the receptacle 18 and is configured to carry the organ 4 to be perfused; and
- a cover 20, hinged to the receptacle 18 at hinges 21 and configured to move from an opening position and a closing position.

In particular, in the opening position, the cover 20 allows access to the mesh 19 and positioning of the organ 4 prior to perfusion thereof; differently, in the closing position, the cover 20 isolates the organ 4 arranged on the mesh 19 from the external environment, protecting it and arranging it in a substantially sterile environment. Furthermore, in further embodiments (not shown here), the cover 20 is hinged to the base 18 at one single hinge 21.

The reservoir 16, the receptacle 18 and the cover 20 are made of plastic material, for example polyurethane (PU). In particular, the cover 20 is transparent, so that a user can monitor the perfusion and the conditions of the organ 4 during perfusion. In this way, the conductive base 16B is insulated.

The receptacle 18 comprises a peripheral portion 22, shaped so as to couple with a corresponding peripheral portion 23 of the reservoir 16; in other words, the reservoir 16 carries the receptacle 18 at its peripheral portion 23 when the container 3 is assembled. Furthermore, the hinges 21 are here arranged along a side (for example, a long side) of the peripheral portion 21 of the receptacle 18.

The receptacle 18 furthermore comprises a central portion 24, which has a convex shape, in particular, along an axis Z of a Cartesian reference system XYZ, it is lowered with respect to the peripheral portion 22 of the receptacle 18. In particular, the central portion 24 comprises a curved portion 25, designed to join the peripheral portion 22 to a base portion 26, also forming part of the central portion 24; in addition, the base portion 26 has a plurality of openings 27, which allow fluidic communication between the receptacle 18 and the reservoir 16. The central portion 24 therefore defines a cavity 28, which is designed to allow the passage of the perfusion liquid 5 coming from the organ 4 and directed towards the reservoir 16 when the upper portion 17 is coupled to the reservoir 16 itself, or when the container 3 is assembled.

The mesh 19 comprises:
- a respective peripheral portion 29, shaped so as to be couplable with the peripheral portion 22 of the receptacle 18; and
- a support portion 30, which is configured to support the organ 4 to be perfused when the system 1 is in use.

In particular, the peripheral portion 29 is made of plastic material, for example PU; furthermore, the support portion 30 has a mesh structure and is manufactured with biocompatible and atraumatic materials, namely with materials designed to support and house the organ 4 to be perfused, significantly reducing any traumas that may be caused by the support of the above-mentioned organ 4 during perfusion. In this embodiment, the support portion 30 is made of polyurethane ester.

The support portion 30 is organ-specific, namely it is sized according to the type of organ 4 to be perfused; consequently, the peripheral portion 29 has dimensions that vary according to the size of the support portion 30.

In particular, the support portion 30 of Figure 2A is sized so as to support an adult kidney, which has on average a length comprised between 13 cm and 14.5 cm, a width of 8 cm and a thickness of 3 cm; therefore, the support portion 30 of Figure 2A occupies only a part of the mesh 19, for example, almost half of it. The remaining part of the mesh 19, for example, the remaining half, is dedicated to the peripheral portion 29.

Differently, the support portion 30 of Figure 2B is sized so as to house an adult liver, which has on average a thickness at the level of the right lobe comprised between 12 cm and 15 cm, a transverse diameter of approximately 25 cm and an anteroposterior diameter of approximately 15 cm; therefore, the support portion 30 of Figure 2B almost entirely occupies the area of the mesh 19, leaving an outer frame portion dedicated to the peripheral portion 29.

In other words, as can be seen from Figures 2A and 2B, the renal support portion 30 of Figure 2A has smaller dimensions than the hepatic support portion 30 of Figure 2B, the latter occupying almost all the available surface of the mesh 19.

Furthermore, the support portion 30 of Figure 2B has a convex shape, or is recessed (namely, arranged below along the axis Z) with respect to the peripheral portion 29. Differently, the support portion 30 of Figure 2A is substantially coplanar with the peripheral portion 29, namely the mesh 19 is substantially parallel to a plane XY of the reference system XYZ.

It should be noted that the total dimensions of the renal (Figure 2A) and hepatic (Figure 2B) meshes 19 are the same, namely the different sizing of the support portion 30 and, therefore, of the peripheral portion 29 of the mesh 19 do not affect the total dimensions of the mesh 19, which are thus fixed; therefore, the dimensions of the mesh 19 and, therefore, of the upper portion 17 are independent of the type of organ 4 to be perfused, since a different sizing of the peripheral portions 22, 23 of the receptacle 18 and of the reservoir 16, and of the cover 20, is not required. This characteristic allows for an upper portion 17 (and therefore a container 3) with standard dimensions and a mesh 19 with a ratio between the dimensions of the support portion 30 and the peripheral portion 29 that varies according to the type of organ 4.

It should also be noted that when the mesh 19 is coupled to the receptacle 18, the support portion 30 is arranged at a distance from the perfusion liquid 5, namely the support portion 30 defines with the reservoir 6 and the receptacle 18 a separation volume V that prevents the organ 4 being immersed in the perfusion liquid 5 when the system 1 is in use, therefore limiting possible contaminations of the organ 4; by way of example, the organ 4 is protected from possible contamination such as, for example, contamination from chimera virus.

The upper portion 17 furthermore comprises a groove 31, with quadrangular shape (for example, rectangular with rounded corners), obtained in the receptacle 18 and configured to house a plug 32, made of soft plastic material (for example, silicone); in particular, the plug 32 is designed to house and allow stable fixing of connection means for the organ 4, such as, for example, cannulas designed to be inserted in veins and/or arteries of the organ 4.

The plug 32 comprises a pair of flaps made of soft plastic material, such as silicone, arranged parallel to each other so as to define a slot 33, which is arranged in a substantially central and longitudinal position (in particular, parallel to the axis Z) for the entire thickness of the plug 32 and is designed to receive one or more connection means for perfusion of the organ 4.

In particular, in the case of renal perfusion, the slot 33 of the plug 32 receives a first connection means 34, designed to be inserted in the renal artery of the organ 4.

On the other hand, in the case of hepatic perfusion (Figure 2B), the slot 33 of the plug 32 receives a first connection means 34 designed to be inserted in the hepatic artery of the organ 4 and a second connection means 36 designed to be inserted in the portal vein of the organ 4.

The container 3 furthermore comprises first collection means 59, designed to collect any fluids expelled during perfusion of the organ 4. In particular, during the renal perfusion (Figure 2A), the first collection means 59 are configured to collect, for example, the urine expelled from the organ 4; differently, during the hepatic perfusion (Figure 2B), the first collection means 59 are configured to collect, for example, the bile expelled from the organ 4.

Prior to perfusion of the organ 4, the temperature of the perfusion liquid 5 contained in the reservoir 16, in particular in the conductive base 16B, is varied as a function of the perfusion mode chosen by the user for perfusion of the organ 4, for example hypo- or normothermic. For said purpose, the thermoregulation system 6 allows, according to a command transmitted from the control unit 9, regulation of the temperature of the perfusion liquid 5; in particular, the temperature of the perfusion liquid 5 can be fixed at a point value or varied automatically based on a predefined thermoregulation profile, namely a temperature trend variable over time, the latter pre-loaded in a database of the control unit 9 and selectable by the user. In further embodiments, not shown here, the user can create a thermoregulation profile designed for the specific needs of the situation; this thermoregulation profile can be produced in any phase of the perfusion treatment of the organ 4. In other words, the thermoregulation system 6 allows dynamic variation of the temperature of the perfusion liquid 5 at any time during perfusion of the organ 4.

With reference to Figures 3A and 3B, the thermoregulation system 6 comprises, in addition to the thermoregulation plate 7, a cooling unit 37, connected to the thermoregulation plate 7 and including:
- a compressor 38, for example a linear compressor (such as, for example, the compressor WMD7H by Embrace Wisemotion) connected to the thermoregulation plate 7;
- an evaporator 41, for example a series of resistors (shown in Figure 3B as a coil made of conductive metal material), connected to the compressor 38 and configured to evaporate a cooling liquid of the cooling unit 37 in order to obtain a cooling gas and allow cooling of the container 3 (in particular, of the conductive base 6B) through the plate 7;
- a condenser 39, connected to the compressor 38 by means of a line 43 and to the thermoregulation plate 7 by means of a line 44; and
- a fan 40 (for example, an axial fan) coupled to the condenser 39.

In the present embodiment, since the thermoregulation system 6 allows operation of the system 1 in both hypothermic and normothermic modes, and also in subnormothermic mode, the compressor 38 is configured to operate with evaporation temperatures comprised, for example, between -33°C and 5°C.

The thermoregulation system 6 furthermore comprises a heating unit 72, which comprises a set of resistors arranged in series; in particular the heating unit 72 is carried by the cooling unit 37 and is connected to the thermoregulation plate 7. The heating unit 72 is configured to operate, for example, with a voltage of 230 V and to generate a maximum power, for example, of 300 W.

In other words, the thermoregulation plate 7 is connected both to the cooling unit 37 and to the heating unit 72, which are controlled by means of the user interface 8 to modify the temperature of the perfusion liquid 5 in the container 3 according to the indications of the user, as described in further detail in the following.

In use, when perfusion of the organ 4 takes place, a user manually sets a temperature or a predefined thermoregulation profile by means of the user interface 8; this command is then transmitted to the control unit 9, which transmits an electric signal to the thermoregulation system 6 in order to make it operative based on the setting carried out. It should be noted that, in use, according to the temperature desired or pre-set according to the desired thermoregulation profile, the control unit 9 will activate alternatively the heating unit 72 or the cooling unit 37 on one or more occasions during perfusion of the organ 4.

In the following, a heating phase and a cooling phase are described separately; in particular, said phases are alternative to each other if, for example, one single temperature value has been set. Differently, if the user has selected a predefined thermoregulation profile, the above-mentioned phases can follow each other (for example, one or more heating phases followed by one or more cooling phases or vice versa).

In the heating phase, the control unit 9 transmits an electrical signal Sᵣ designed to activate the heating unit 72; in particular, the electrical signal Sᵣ is a signal, for example, of the ON/OFF type, which allows activation/de-activation of a current flow iᵣ in the series of resistors of the heating unit 72. Therefore, according to the known Joule effect, the flow of the current iᵣ determines a production of heat and, therefore, the heating unit 72 generates heat, heating the thermoregulation plate 7 by thermal conduction. Consequently, the heat generated is transmitted again by thermal conduction to the conductive base 16B of the reservoir 16 and, therefore, to the perfusion liquid 5, which heats up. In this phase, the cooling unit 37 is de-activated, namely its power is 0%; this power setting is defined by means of an electrical signal S_{f}, transmitted to the control unit 9 and indicative of de-activation of the cooling unit 37.

In the cooling phase, the control unit 9 emits a further electrical signal Sε according to the selection made by the user; in particular, the electrical signal Sε is a signal that allows the power of the cooling unit 37 to be modulated by a percentage comprised between 0% and 1000. It should be noted that, in this phase, the heating unit 72 is deactivated, namely the control unit 9 emits a further electrical signal Sᵣ designed to interrupt the current flow iᵣ through the resistors of the heating unit 72.

Consequently, the cooling unit 37 is activated and operates as a known cooling circuit. In detail the compressor 38 compresses the cooling gas bringing it to high pressure, heating it. The cooling gas at high pressure is therefore supplied to the condenser 39 through the line 43; passing through the condenser 39, the cooling gas at high pressure undergoes a transformation that causes it to become the cooling liquid at high pressure. Consequently, the cooling liquid at high pressure is then conveyed through the line 44 first to an expansion valve (not shown), which allows the pressure of the cooling liquid to be reduced, and, subsequently, to the evaporator 41; the passage through the evaporator 41 determines cooling of the cooling liquid and consequent transition to the gaseous state. In other words, the cooling gas is found once again at the outlet of the evaporator 41, in particular at low pressure. The cooling of the cooling liquid causes cooling of the evaporator 41, connected to the thermoregulation plate 7, and therefore cooling of the perfusion liquid 5 in the reservoir 16 through the conductive base 16B. It should be noted that, unlike the known systems, the thermoregulation system 6, in particular the cooling unit 37, allows cooling of the perfusion liquid 5 without the aid of ice, typically used for cooling the perfusion liquid 5, since the cooling principle of a cooling circuit is used.

The above-mentioned thermoregulation system 6 allows the user to vary the temperature set for example from a minimum of +4°C (hypothermia) to a maximum of +37°C (normothermia); in detail, the temperature variation varies over a maximum time (namely from the minimum temperature value to the maximum temperature value), for example, of twenty minutes.

The above-mentioned phases are carried out before and during the perfusion operation; in subsequent phases, the thermoregulation system 6 is controlled by the control unit 9 according to the electrical signals generated by the temperature sensors 12. In other words, the control unit 9 constantly monitors the temperature trend of the perfusion liquid 5 and controls the thermoregulation system 6 so as to maintain said temperature constant, in particular if the user has fixed a specific temperature value, or to regulate this temperature according to the thermoregulation profile selected. It should be noted that the user can modify the temperature of the perfusion liquid 5 at any time via the user interface; if there is a modification to the pre-selected temperature value, the control unit 9 will control the thermoregulation system 6 so that the perfusion liquid 5 is brought to the new pre-selected temperature value.

It should also be noted that the present thermoregulation system 6 allows modification of the temperature of the perfusion liquid 5 to be used during perfusion of the organ 4 without this modification entailing a further liquid for thermoregulation of the perfusion liquid 5. In particular, the perfusion liquid 5 is here configured to be heated or cooled by the thermoregulation system 6, in particular by the heating unit 72 or by the cooling unit 37 respectively, through thermal conduction deriving from the contact between the thermoregulation plate 7 and the conductive base 16B of the reservoir 16 of the container 3. In other words, the thermoregulation system 6 performs a "dry" thermoregulation of the perfusion liquid 5, namely by exploiting the conduction of heat from the thermoregulation plate 7 to the conductive base 16B, where the perfusion liquid 5 is housed separately from the organ 4.

It should be noted that, since the perfusion liquid 5 is not thermoregulated via contact with further liquid for thermoregulation, the risk of contamination of the perfusion liquid 5 by micro-organisms such as bacteria is avoided; this avoids, during perfusion of the organ 4, the latter coming into contact with a contaminated perfusion liquid 5 which could affect the organ 4 itself.

Renal and hepatic perfusion methods are now described with reference to Figures 4 and 5, respectively.

Initially, the user interface 8 notifies the user so that the latter selects the type of treatment to be performed on the organ 4 (in particular, renal perfusion or hepatic perfusion). Once the type of treatment to be performed on the organ 4 has been selected, the user sets a plurality of initial parameters pᵢ, comprising temperature parameters Tᵢ and volume parameters Vᵢ of the perfusion liquid 5 by means of the user interface 8. In particular, the volume parameters Vi vary according to the type of organ 4 to be treated. In detail, in the case of renal perfusion, the volume parameters Vᵢ are comprised, for example, between 1000 mL and 2000 mL; differently, in the case of hepatic perfusion, the volume parameters Vᵢ are comprised, for example, between 1000 mL and 3000 mL. In addition, the user can select the presence of any oxygenation and/or purification phases of the perfusion liquid 5.

Simultaneously, in the present phase, the user mounts and arranges a perfusion circuit and if necessary, an oxygenation/purification circuit for the organ 4 to be treated; in particular, the perfusion and oxygenation/purification circuits are selected according to the type of treatment selected and parameters set; furthermore, the user mounts the reservoir 16 on the thermoregulation plate 7 of the electromedical perfusion unit 2.

Before carrying out the renal or hepatic perfusion by means of the perfusion and/or purification/oxygenation circuits, the system 1 is operated empty, namely without the organ 4, so as to verify correct functionality thereof and allow the perfusion liquid 5 to be distributed uniformly in the perfusion and/or oxygenation/purification circuits, eliminating any air bubbles in the latter.

Subsequently, the user arranges the organ 4 on the mesh 19 of the upper portion 17, connecting it only to the first connection means 34 in the case of renal perfusion or also to the second connection means 36 in the case of hepatic perfusion. Therefore, the user transfers the upper portion 17 onto the reservoir 16, effectively assembling the container 3 on the electromedical perfusion unit 2. It should be noted that, in this phase, the connection means 34, 36 and the perfusion and/or oxygenation/purification circuits are connected, thus obtaining the renal and hepatic treatment circuits shown in Figures 4 and 5. In particular, in the case of renal perfusion, only the first connection means 34 are used, for example a cannula, which, as previously anticipated, are inserted in the renal artery of the organ 4. In the case of hepatic perfusion, both the first connection means 34 which, as previously anticipated, are connected to the hepatic artery of the organ 4, and the second connection means 36 which are connected to the portal vein of the organ 4, are used.

In particular, Figure 4, in the treatment circuit for renal perfusion, where the organ 4 is a kidney, the system 1 comprises a renal perfusion circuit 45, which is configured to connect the reservoir 16 to the first connection means 34 and to direct the perfusion liquid 5 from the reservoir 16 to the organ 4 by means of a first pump 47, arranged on a first pumping line 61; in particular, the first pumping line 61 connects the first pump 47 and the first connection means 34. Furthermore, the first pump 47, which is an arterial perfusion pump, has a respective rotor (not shown), configured to rotate in a first rotation direction (for example, anticlockwise); for example, the first pump 47 is a peristaltic pump. In further embodiments, not shown here, the system 1 can comprise more than one first pump 47, namely there can be various pumps, similar to the first pump 47, arranged in series or arranged parallel to one another, rotating simultaneously, and forming a system of perfusion pumps for arterial perfusion of the kidney.

The first pump 47 is configured to maintain the pressure and flow of the perfusion liquid 5 drawn from the reservoir 16 according to the values of the parameters pi detected by the plurality of sensors 10. The first pump 47 is controlled by the control unit 9, which generates electrical control signals designed to modify the value of the rotor rotation speed of the first pump 47 according to the values of the parameters pi detected by the plurality of sensors 10 so that the pressure of the perfusion liquid 5 is constant.

In the present embodiment, the system 1 also envisages the presence of an oxygenation circuit 46, which is configured to withdraw the perfusion liquid 5 from the reservoir 16 by means of a system of pumps 48, oxygenate it by means of an oxygenator 54 and reintroduce it into the reservoir 16 by means of a second pumping line 62. In particular, the system of pumps 48 comprises a second and a third pump 49, 50, comprising respective rotors that rotate in the first rotation direction (for example, anticlockwise), are connected to the reservoir 16 and are arranged parallel to each other. In particular, the third pump 50 is configured to rotate in an asynchronous manner with respect to the second pump 49; in other words, the rotor of the third pump 50 is phase-shifted by a phase-shift angle α which is comprised, for example, between 45° and 90°. In this way, the performances of the oxygenation circuit 46 are optimized and allow optimal oxygenation of the organ 4, in particular for high flows of perfusion liquid 5. In the present embodiment, the second and third pumps 49, 50 are peristaltic pumps, for example.

Differently, Figure 5, in hepatic perfusion, where the organ 4 is a liver, the system 1 envisages: a perfusion circuit 65 which conveys the perfusion liquid 5 from the reservoir 16 to a hepatic venous perfusion circuit 55 and to a hepatic arterial perfusion circuit 56.

The hepatic venous perfusion circuit 55 furthermore comprises a system of pumps 48, similar to the system of pumps 48 of Figure 4 and, therefore, comprising the second and third pumps 49, 50, which include respective rotors that rotate in the first rotation direction (for example, anticlockwise), are connected to the reservoir 16 and are arranged parallel to each other. Also in the embodiment of Figure 5, the third pump 50 is configured to rotate in an asynchronous manner with respect to the second pump 49; in other words, the rotor of the third pump 50 is phase-shifted by a phase-shift angle α which is comprised, for example, between 45° and 90°. Also in the embodiment of Figure 5, the second and third pumps 49, 50 are peristaltic pumps. Furthermore, the hepatic venous perfusion circuit 55 comprises a third pumping line 67, designed to connect the system of pumps 48 to the second connection means 36, here connected to the portal vein of the organ 4, in such a way as to direct at least a part of the perfusion liquid 5 drawn from the reservoir 16 towards the organ 4.

The hepatic arterial perfusion circuit 56 comprises a fourth pumping line 66, connected to the perfusion circuit 65 and to the first connection means 34, here connected to the hepatic artery of the organ 4, so as to direct a further part, separate from the part introduced into the third pumping line 67, of the perfusion liquid 5 towards the organ 4.

In the present embodiment, the system 1 also envisages the presence of a purification circuit 57, which is configured to withdraw the perfusion liquid 5 from the reservoir 16 by means of a pump similar to the first pump 47 of Figure 4 (and, therefore, indicated by the same reference letter and number), which is designed to purify the perfusion liquid 5 by means of an absorbent filter 53 and re-introduce it into the reservoir 16 for subsequent perfusion operations by means of a fifth pumping line 68.

In the case of renal perfusion, the organ 4, arranged and carried on the mesh 19, is connected to the first pumping line 61 by means of the first connection means 34. In the case of hepatic perfusion, the organ 4, arranged and carried on the mesh 19, is connected to the third pumping line 67 and to the fourth pumping line 66 respectively by means of the first and second connection means 34, 36.

Subsequently, the user sets perfusion and treatment parameters pⱼ, which comprise treatment time parameters pₜⱼ, flow parameters Φⱼ and pressure parameters prⱼ, relative to the perfusion liquid 5 and to the intended perfusion method; furthermore, in this phase, further parameters can be set relative to the oxygenation and purification of the perfusion liquid 5 if the user wishes to perform oxygenation and/or purification operations.

In particular, treatment time parameters pₜⱼ are relative to the desired duration of the treatment; the maximum limit for duration of the treatment of the organ 4 is 6 hours.

The pressure parameters prⱼ comprise parameters relative to the arterial perfusion (measured in mmHg) and are indicative of the systolic pressure that must be reached and maintained during perfusion of the renal or hepatic artery in the case of renal and hepatic perfusion respectively.

The flow parameters Φⱼ comprise: parameters relative to the maximum arterial perfusion flow (measured in mL/min), indicative of the maximum flow that can be reached, with arterial perfusion pressure set, during perfusion of the renal artery or the hepatic artery respectively during renal perfusion and hepatic perfusion; and parameters relative to the oxygenation flow (measured in mL/min), indicative of the movement flow of the perfusion liquid through the oxygenator.

Once the parameters have been set, the system 1 performs the perfusion operations, which are described in the following with reference to renal perfusion (Figure 4) and hepatic perfusion (Figure 5).

With reference to Figure 4, in perfusion of the organ 4, the first pump 47 withdraws the perfusion liquid 5 from the reservoir 16 by means of the first pumping line 61; in particular, before being conveyed to the first pump 47, the level sensor 15 constantly monitors the quantity of perfusion liquid 5 contained in the reservoir 16, so that the quantity of perfusion liquid 5 is maintained above a given level (for example, predefined by the user prior to beginning of the renal perfusion operations) and, therefore, avoiding the possible entry of air into the first pumping line 61 in the organ 4 during renal perfusion. In the event of air bubbles being present, the pair of electroclamps (not shown) coupled to the flow and air presence sensor 13 redirect the perfusion liquid 5 towards the reservoir 16; differently, in the absence of air bubbles, the perfusion liquid 5 flows towards the organ 4.

When the perfusion liquid 5 reaches the first pump 47, the latter modifies the flow of the perfusion liquid 5 by rotation of its rotor, so that this flow has a sinusoidal trend with pulsatility peaks imparted by rotation of the first rotor of the first pump 47. In greater detail, the rotation speed of the first rotor of the first pump 47 is not constant over time, as it varies according to the flow parameters Φⱼ and, in particular, the pressure parameters prⱼ set; in this way, the arterial renal perfusion is performed at controlled pressure.

Subsequently, the perfusion liquid 5 with modified flow runs along the first pumping line 61; in particular, before reaching the organ 4, a pressure sensor 14 checks that the pressure of the perfusion liquid 5 with modified flow corresponds to the pressure value fixed by the pressure parameters prⱼ. If this pressure value does not correspond, the control unit 9 will generate a corresponding electrical control signal designed to modify the rotation speed of the first pump 47. This pressure sensor 14 allows accurate measurement of the pressure of the perfusion liquid 5 flowing into the following absorbent filter 53, if the option of purification of the perfusion liquid 5 has been selected at the beginning.

In fact, if the purification option has also been selected in the settings of the initial parameters pi, the perfusion liquid 5 with modified flow is directed towards the absorbent filter 53, so as to absorb any undesired bodies or elements (for example, inflammatory mediators, pro- and anti-inflammatory cytokines, bilirubin and myoglobin.

Subsequently, a further pressure sensor 14 arranged along the first pumping line 61 verifies that the pressure of the perfusion liquid 5 with modified flow corresponds to the set values. This perfusion pressure measured by the pressure sensor 14 represents the perfusion pressure at entry to the organ 4, which is such as to guarantee a substantially physiological and pressure-controlled perfusion. If this pressure value does not correspond, the control unit 9 will generate corresponding electrical command signals designed to modify the rotation speed of the first pump 47. A temperature sensor 12, arranged in series with the pressure sensor 14 and along the first pumping line 61, before the organ 4, checks that the temperature of the perfusion liquid 5 with modified flow corresponds to the values set by the temperature parameters Tᵢ. If this temperature value does not correspond to the pre-set values, the control unit 9 will generate corresponding electrical command signals designed to modify the current supplied to the heating unit 72 or to the cooling unit 37, so as to increase or decrease the temperature of the thermoregulation plate 7 and, therefore, of the perfusion liquid 5.

The perfusion liquid 5 with modified flow is therefore directed towards a flow and air presence sensor 13, which verifies the presence of any air bubbles; in particular, the flow and air presence sensor 13 determines opening/closing of the pair of electroclamps (not shown) of the flow sensor 15 arranged at the beginning of the pumping line 61 so as to protect the organ 4 from possible embolism. At this point, by means of the first pumping line 61, the perfusion liquid 5 with modified flow reaches the first connection means 34 and, therefore, the organ 4.

The perfusion liquid 5 with modified flow thus pumped is expelled from the organ 4 by means of the renal venous system of the latter (and, therefore, towards the outside of the organ 4), in particular towards the reservoir 16; in other words, the expelled perfusion liquid 5 with modified flow (defined in the following as perfused liquid 5') flows out of the mesh 19. Therefore, due to the force of gravity, the perfused liquid 5' passes through the support portion 30 of the mesh 18 and is reintroduced into the reservoir 16.

Simultaneously or subsequently to the above-mentioned arterial renal perfusion phase, the perfusion liquid 5 (if necessary mixed with the perfused liquid 5') is withdrawn by the system of pumps 48 through the second pumping line 62; in particular, the second pumping line 62 is first branched into a first and a second branch 63, 64, connected respectively to the second and third pumps 49, 50 of the system of pumps 48. Therefore, the perfusion liquid 5 withdrawn is simultaneously split into a first and second portion 5A, 5B and directed towards the second and third pumps 49, 50, which, similarly to the first pump 47, modify the flow of the first and second portions 5A, 5B respectively in such a way that they each have a sinusoidal trend with pulsatility peaks imparted by the respective rotors of the second and third pumps 49, 50.

The first and second portions 5A, 5B with modified flows are then redirected towards the second pumping line 62 (in particular, towards a pressure sensor 14 of the oxygenation circuit 16), namely the branches 63, 64 are re-united; in this way, the first and second portions 5A, 5B are mixed to generate again the perfusion liquid 5 (namely, the respective sinusoidal trends with respective pulsatility peaks of the first and second portions 5A, 5B are added to each other), which has a modified flow, in particular with a sinusoidal trend with dampened pulsatility peaks. In fact, the asynchrony between the second and third pumps 49, 50 allows different pulsatilities to be applied to the first and second portions 5A, 5B and therefore to obtain, once re-united, a perfusion liquid 5 with modified flow and, at the same time, with a pulsatility given by the sum of the pulsatilities of the first and second portions 5A, 5B, which partially compensate for each other; in other words, the system of pumps 48 allows modification of the flow of perfusion liquid 5, obtaining a flow with controlled pressure and dampened pulsatility (namely, practically continuous over time). Furthermore, assuming that the phase-shift angle α is comprised between 45° and 90°, the pulsatility of the perfusion liquid 5 with dampened pulsatility is dampened by a percentage approximately equal to 500.

Subsequently, the pressure sensor 14 checks that the pressure of the perfusion liquid 5 with dampened pulsatility corresponds to the pressure value fixed by the pressure parameters prⱼ. If this pressure value does not correspond, the control unit 9 will generate a corresponding electrical command signal designed to modify the rotation speed of the second and third pumps 49, 50 of the system of pumps 48.

Subsequently, if an oxygenation phase is scheduled, the perfusion liquid 5 with dampened pulsatility is oxygenated by means of the oxygenator 54, the latter connected to a gas line (not shown, for example a biomedical tube with antibacterial filter included).

Therefore, the perfusion liquid 5 with dampened flow is directed first towards a pressure sensor 14, designed to measure the pressure of the perfusion liquid 5 with dampened flow following the oxygenation performed by the oxygenator 54 and to check that the value of this pressure corresponds to the value set by the pressure parameters prⱼ; if this check gives a negative result, the control unit 9 will generate corresponding electrical command signals designed to modify the rotation speed of the second and third pumps 49, 50. The perfusion liquid 5 with dampened pulsatility is subsequently conveyed towards an arterial filter 80, arranged along the second pumping line 62 and in particular interposed between the oxygenator 54 and a flow and air presence sensor 13, designed to eliminate particulates and any microbubbles. Subsequently, the perfusion liquid 5 with dampened pulsatility is conveyed towards the flow and air presence sensor 13, which checks that there are no air bubbles in the perfusion liquid 5.

The perfusion liquid 5 with dampened pulsatility is received and pumped towards the reservoir 16; in particular, before reaching the reservoir 16, a temperature sensor 12 checks that the temperature of the perfusion liquid 5 with dampened pulsatility corresponds to the temperature value fixed by the temperature parameters Tᵢ. If this temperature value does not correspond to the pre-set values, the control unit 9 will generate corresponding electrical command signals designed to modify the current supplied to the heating unit 72 or to the cooling unit 37, in such a way as to increase or decrease the temperature of the thermoregulation plate 7 and, therefore, of the perfusion liquid 5 with dampened pulsatility.

Lastly, the perfusion liquid 5 with dampened pulsatility is re-introduced into the reservoir 16, so that it can be re-used for subsequent perfusion operations.

In the case of renal perfusion, the first collection means 59, for example an additional container, is directly connected to the organ 4 and is configured to collect a fluid, such as urine, produced by the organ 4 during the perfusion; in this way, the user can verify the vitality of the organ 4, in addition to its operating capacity.

Furthermore, second collection means 60, for example a further additional container, are connected to the second pumping line 62 and are configured to receive the perfusion liquid 5 at the end of the perfusion procedure of the organ 4, namely they operate as a discharge at the end of the renal perfusion.

With reference to Figure 5, in hepatic perfusion, the perfusion liquid 5 is drawn from the reservoir 16 by means of a perfusion circuit 65 so that it can be directed towards the hepatic venous perfusion circuit 55 and/or the hepatic arterial perfusion circuit 56, so as to perform a double perfusion of the organ 4; before reaching the perfusion circuits 55, 56, a level sensor 15 verifies the presence of air bubbles. If the above-mentioned air bubbles are found, the respective pair of electroclamps (not shown) coupled to the level sensor 15 redirect the perfusion liquid 5 towards the reservoir 1; differently, in the absence of air bubbles, the perfusion liquid 5 flows towards the perfusion circuits 55, 56.

In the case of arterial perfusion and similarly to the description with reference to renal perfusion, the perfusion liquid 5 is directed towards the third pump 47, which modifies the flow of the perfusion liquid 5 so that it has a sinusoidal trend with a pulsatility imparted by rotation of the rotor of the third pump 47, therefore obtaining a perfusion liquid 5 with modified flow.

Subsequently, the perfusion liquid 5 with modified flow is directed towards the first connection means 34 and, therefore, towards the organ 4 by means of the fourth pumping line 66; before reaching the organ 4, a pressure sensor 14, a flow and air presence sensor 13 and a temperature sensor 12 check that the pressure, flow and temperature values correspond to the pressure and flow values fixed by the pressure prⱼ, flow Φᵢ and temperature Tᵢ parameters. If this pressure, flow and temperature values do not correspond, the control unit 9 will generate corresponding electrical command signals designed to modify the rotation speed of the first pump 47 and, respectively, the heating unit 72 or the cooling unit 37 to regulate the temperature of the thermoregulation plate 7.

Simultaneously to the above-mentioned arterial hepatic perfusion phase and similarly to what is discussed with reference to arterial renal perfusion, in the case of hepatic venous perfusion, the perfusion liquid 5 is drawn by the system of pumps 48 through the withdrawal line 65, which branches into respective first and second branches 69, 70, connected respectively to the second and third pumps 49, 50. Therefore, the perfusion liquid 5 withdrawn is split into the first and second portions 5A, 5B and directed towards the second and third pumps 49, 50, which modify the flow of the first and second portions 5A, 5B respectively so that they each have a sinusoidal trend with pulsatility peaks imparted by the respective rotors of the second and third pumps 49, 50.

Therefore, the first and second portions 5A, 5B with modified flows are directed towards the third pumping line 67 (in particular, towards a pressure sensor 14 of the perfusion circuit 55), or the branches 69, 70 are re-united (namely, the sinusoidal trends of the first and second portions 5A, 5B are added together); in this way, the perfusion liquid 5 is obtained once again, having a sinusoidal trend with dampened pulsatility peaks, similarly to what is discussed with reference to the system of pumps 48 of Figure 4.

Subsequently, the pressure sensor 14 checks that the pressure of the perfusion liquid 5 with dampened pulsatility corresponds to the pressure value fixed by the pressure parameters prⱼ. If this pressure value does not correspond, the control unit 9 will generate a corresponding electrical command signal designed to modify the rotation speed of the second and third pumps 49, 50 of the system of pumps 48.

Subsequently, if the perfusion liquid 5 is to be oxygenated, the perfusion liquid 5 with dampened pulsatility is oxygenated by means of the oxygenator 54, the latter connected to a gas line (not shown) similarly to what is discussed in the case of the renal perfusion described with reference to Figure 4.

Therefore, a pressure sensor 14, a flow and air presence sensor 13 and a temperature sensor 12 check that the pressure, flow and temperature values of the perfusion liquid 5 with dampened pulsatility correspond to the pressure, flow and temperature values fixed by the pressure prⱼ, flow Φᵢ and temperature Tᵢ parameters. If this pressure, flow and temperature values do not correspond, the control unit 9 will generate corresponding electrical command signals designed to modify the rotation speed of the second and third pumps 49, 50 of the system of pumps 48 and, respectively, the heating unit 72 or the cooling unit 37 to regulate the temperature of the thermoregulation plate 7.

It should be noted that, along the third pumping line 67, in particular between the pressure sensor 14 and the flow and air presence sensor 13, an arterial filter 80 is provided similar to the arterial filter shown in Figure 4 and operating in the same way.

Subsequently, the perfusion liquid 5 with dampened pulsatility is directed, by means of the third pumping line 67, towards the second connection means 36 and, therefore, the organ 4.

The perfusion liquid 5 with modified flow coming from the fourth pumping line 66 and the perfusion liquid 5 with dampened pulsatility coming from the third pumping line 67, of the organ 4, thus pumped, are then drained as perfused liquid 5' by means of the suprahepatic venous system of the organ 4 (and, therefore, towards the outside of the organ 4), in particular towards the reservoir 16; in other words, the perfused liquid 5' flows out onto the mesh 19. Therefore, due to the force of gravity, the perfused liquid 5' passes through the support portion 30 of the mesh 19 and is re-introduced into the reservoir 16.

Simultaneously to the hepatic venous perfusion and/or hepatic arterial perfusion phases, the perfusion liquid 5 (if necessary mixed with the perfused liquid 5') is drawn from the reservoir 16 by a fourth pump 58 via the fifth pumping line 68; in particular, the fourth pump 58, similarly to the first renal perfusion pump 47 described with reference to Figure 4, modifies the flow of the perfusion liquid 5 so that it has a sinusoidal trend with pulsatility imparted by the rotor of the fourth pump 58. For example, the fourth pump 58 is a peristaltic pump.

Subsequently, if the perfusion liquid 5 is to be purified, the fourth pump 58 directs the perfusion liquid 5 with modified flow towards the absorbent filter 53, which purifies the above-mentioned perfusion liquid 5 with modified flow flowing out of the fourth pump 58; before reaching the absorbent filter 53, a pressure sensor 14 checks that the pressure value of the perfusion liquid 5 with modified flow corresponds to the pressure value fixed by the pressure parameters pi. If this pressure value does not correspond, the control unit 9 will generate a corresponding electrical command signal designed to modify the rotation speed of the fourth pump 58.

Therefore, the perfusion liquid 5 with modified flow and purified is directed towards the reservoir 16 by means of the fifth pumping line 68, so that it can be re-used for subsequent perfusion operations.

In the case of hepatic perfusion, the first collection means 59, for example an additional container, are connected to the organ 4 (in particular at the bile duct) and are configured to collect the bile produced by the organ 4 during perfusion; in this way and similarly to what is discussed with reference to Figure 4, the user can verify the vitality of the organ 4, and its operating capacity.

Furthermore, the second collection means 60, for example a further additional container, are connected to the fifth pumping line 68 and are configured to receive the perfusion liquid 5 discharged and purified by the absorbent filter 53.

At the end of the renal or hepatic perfusion operations, the system 1 is de-activated (namely, the pumps 47, 49, 50 and 58 do not withdraw the perfusion liquid 5 again and wait for the latter to be completely discharged into the second collection means 60) and the first and/or the second connection means 34, 36 are disconnected, so as to free the organ 4, which is then drawn from the container 3 for any subsequent transplant operations.

The present thermoregulation system and the relative ex vivo perfusion system have various advantages.

In particular, the present thermoregulation system 6 allows the user to dynamically set the operating temperature, namely the desired temperature of the perfusion liquid 5, in any phase of the perfusion process of the organ 4; in this way, perfusion of the organ 4 can be performed in different operating conditions, according to the needs of the specific situation.

In addition, the present thermoregulation system 6 allows an appropriate thermoregulation profile to be set as required, at any moment of the perfusion process. In particular, by means of the control unit 9, the user can set an initial thermoregulation profile, which allows the thermoregulation system 6 to correspondingly vary the temperature of the heating unit 72 or of the cooling unit 37 and, therefore, of the thermoregulation plate 7 and of the perfusion liquid 5; this thermoregulation profile can therefore be modified or replaced with a further thermoregulation profile at any moment of the perfusion process, again by means of the control unit 9.

In addition, the structure of the container 3 together with the heating/cooling system implemented by the thermoregulation system 6 allow the morphological and physiological characteristics of the organ 4 to be preserved in an optimal manner; in fact, not only is the organ 4 supported by a mesh 19 of the container 3, namely it is not immersed in the perfusion liquid 5, but the perfusion liquid 5 is not even cooled using ice, but by using the cooling unit 37. In other words, the organ 4 is not subject to the temperature variations of the perfusion liquid 5 and, at the same time, not being in contact, it is better protected against possible contamination risks.

In addition, the present thermoregulation system 6 allows temperature regulation of the perfusion liquid 5 without the use of heating and/or cooling liquids; in fact, the perfusion liquid 5 is heated or cooled by exploiting the heat contact transmission from the thermoregulation plate 7 to the conductive base 16B of the reservoir 16 of the container 3. In other words, thermoregulation of the perfusion liquid 5 is performed "dry", namely without the aid of further thermoregulation liquids that could lead to contamination of the perfusion liquid 5 and, therefore, to damage of the organ 4.

Lastly it is clear that modifications and variants can be made to what is described and illustrated here without departing from the scope of the present invention, as defined in the attached claims.

### LIST OF REFERENCE NUMBERS OF THE FIGURE

- 1: ex vivo perfusion system
- 2: electromedical unit
- 3: container
- 4: organ
- 5: perfusion liquid
- 5': perfused liquid
- 5A: first portion
- 5B: second portion
- 6: thermoregulation system
- 7: plate
- 8: user interface
- 9: control unit
- 10: plurality of sensors
- 11: plurality of pumps
- 12: temperature sensors
- 13: flow and air presence sensors
- 14: pressure sensors
- 15: level sensors
- 16: reservoir
- 16A: base
- 16B: conductive base
- 17: upper portion
- 18: receptacle
- 19: mesh
- 20: cover
- 21: hinges
- 22: peripheral portion
- 23: peripheral portion
- 24: central portion
- 25: curved portion
- 26: base portion
- 27: plurality of openings
- 28: cavity
- 29: peripheral portion
- 30: support portion
- 31: groove
- 32: plug
- 33: first opening
- 34: first connection means
- 36: second connection means
- 37: cooling unit
- 38: compressor
- 39: condenser
- 40: fan
- 41: metal structure
- 42: line
- 43: line
- 44: line
- 45: perfusion circuit
- 46: oxygenation circuit
- 47: first pump
- 48: system of pumps
- 49: second pump
- 50: third pump
- 53: absorbent filter
- 54: oxygenator
- 55: venous perfusion circuit
- 56: arterial perfusion circuit
- 57: purification circuit
- 58: fourth pump
- 59: first collection means
- 60: second collection means
- 61: first pumping line
- 62: second pumping line
- 63: first branch
- 64: second branch
- 65: perfusion circuit
- 66: fourth pumping line
- 67: third pumping line
- 68: fifth pumping line
- 70: control system
- 72: heating unit
- 80: arterial filter
- V: separation volume
- Sᵣ: electrical signal
- iᵣ: current
- S_{f}: electrical signal
- α: phase-shift angle
- pi: initial parameters
- Vᵢ: volume parameters
- Tᵢ: temperature parameters
- pⱼ: perfusion and treatment parameters
- Φⱼ: flow parameters
- prⱼ: pressure parameters
- pₜⱼ: treatment time parameters

## Claims

1. An ex vivo perfusion system (1) of an organ (4) comprising:
- an electromedical perfusion unit (2);
- a container (3) coupled to the electromedical perfusion unit (2) and designed to contain the organ (4) to be perfused with a perfusion liquid (5);
- a control unit (9) configured to generate at least a first electrical signal (Sᵣ) and at least a second electrical signal (S_{f}); and
- a thermoregulation system (6) comprising a thermoregulation plate (7); and
wherein the thermoregulation system (6) is couplable to the control unit (9),
wherein the container (3) comprises:
- a reservoir (16), couplable to the thermoregulation plate (7) and configured to contain the perfusion liquid (5); and
- an upper portion (17), fluidically and physically couplable to the reservoir (16) and designed to contain the organ (4) to be perfused,
wherein the upper portion (17) comprises:
- a receptacle (18), couplable to the reservoir (16) and in fluid communication with the latter when coupled to the reservoir (16);
- a mesh (19), couplable to the receptacle (18) and configured to carry the organ (4) to be perfused; and
- a cover (20), hinged to the receptacle (18) at hinges (21) and configured to move between an opening position and a closing position,
wherein the mesh (19) comprises:
- a peripheral portion (29), shaped so as to be couplable with a peripheral portion (22) of the receptacle (18); and
- a support portion (30), which is configured to support the organ (4) to be perfused when the system (1) is in use,
wherein the support portion (30) defines with the reservoir (16) and the receptacle (18) a separation volume (V) that prevents the organ (4) being immersed in the perfusion liquid (5) when the system (1) is in use,
wherein the reservoir (16) has a base (16A), configured to fix the container (3) to the electromedical unit (2), and a conductive base (16B) thermally coupled to the plate (7), said conductive base (16B) being further configured to contain the perfusion liquid (5),
wherein the thermoregulation plate (7) is designed to carry the container (3) and to heat or cool the perfusion liquid (5) contained in the container (3) thanks to the thermoregulation system (6) being configured to heat or cool the perfusion liquid (5) through thermal conduction deriving from the contact between the thermoregulation plate (7) and the conductive base (16B) of the reservoir (16),
wherein the perfusion liquid (5) is configured to be heated or cooled through the conductive base (16B) of the container (3) by means of thermal conduction by the thermoregulation plate (7),
the thermoregulation system (6) further comprising:
a heating unit (72) connected to the thermoregulation plate (7) and configured to heat said thermoregulation plate (7) as a function of said at least one first electrical signal (Sᵣ) so as to heat the perfusion liquid (5) in the reservoir (16); and
a cooling unit (37) connected to the thermoregulation plate (7) and configured to cool said thermoregulation plate (7) as a function of said at least one second electrical signal (Sf) so as to cool the perfusion liquid (5) in the reservoir (16),
wherein the heating unit (72) comprises a plurality of resistors arranged in series.

2. The ex vivo perfusion system (1) according to claim 1, wherein said at least first signal (Sᵣ) is configured to activate or deactivate the flow of a heating current (iᵣ) in said plurality of resistors.

3. The ex vivo perfusion system (1) according to any of the preceding claims, wherein the cooling unit (37) comprises:
- a compressor (38), coupled to the thermoregulation plate (7) and configured to compress a cooling gas;
- a condenser (39), connected to the compressor (38), and configured to condense the cooling gas to obtain a cooling liquid; and
- an evaporator (41), connected to the compressor (38) and to the condenser (39) and configured to evaporate the cooling liquid to obtain the cooling gas.

4. The ex vivo perfusion system (1) according to any of the preceding claims, wherein at least said second electrical signal (Sf) is a modulation signal that allows a power of the cooling unit (37) to be regulated.

5. The ex vivo perfusion system (1) according to the preceding claim, wherein at least said second electrical signal (Sf) allows the power of the cooling unit to be regulated by a percentage comprised between 0% and 1000.

6. The ex vivo perfusion system (1) according to any of the preceding claims, wherein the thermoregulation system (6) is further configured to regulate the temperature of the thermoregulation plate (7) so that it is comprised between +4°C and +37°C.

7. The ex vivo perfusion system (1) according to any of claims 1-6, wherein the control unit (9) is further configured to generate further first electrical signals (Sᵣ) and/or further second electrical signals (Sf), the heating unit (72) being configured to heat said thermoregulation plate (7) as a function of said further first electrical signals (Sᵣ), the cooling unit (37) being configured to cool said thermoregulation plate (7) as a function of said further second electrical signals (S_{f}), the thermoregulation system (6) being configured to regulate the temperature of said thermoregulation plate (7) according to at least one predefined thermoregulation profile set through said control unit (9) through at least a first and a second electrical signal (Sᵣ, Sf) and said further first and second electrical signals (Sᵣ, Sf) .

## Patentansprüche

1. Ex-vivo-Perfusionssystem (1) eines Organs (4), umfassend:
- eine elektromedizinische Perfusionseinheit (2) ;
- einen Behälter (3), der mit der elektromedizinische Perfusionseinheit (2) gekoppelt und dazu ausgelegt ist, das mit einer Perfusionsflüssigkeit (5) zu perfundierende Organ (4) zu enthalten;
- eine Steuereinheit (9), die dazu konfiguriert ist, mindestens ein erstes elektrisches Signal (Sᵣ) und mindestens ein zweites elektrisches Signal (Sr) zu erzeugen; und
- ein Thermoregulationssystem (6), das eine Thermoregulationsplatte (7) umfasst; und
wobei das Thermoregulationssystem (6) mit der Steuereinheit (9) koppelbar ist,
wobei der Behälter (3) Folgendes umfasst:
- ein Reservoir (16), das mit der Thermoregulationsplatte (7) koppelbar ist und so konfiguriert ist, dass es die Perfusionsflüssigkeit (5) enthält; und
- einen oberen Abschnitt (17), der fluidisch und physikalisch mit dem Reservoir (16) koppelbar ist und dazu ausgelegt ist, das zu perfundierende Organ (4) zu enthalten,
wobei der obere Abschnitt (17) Folgendes umfasst:
- eine Aufnahme (18), die mit dem Reservoir (16) koppelbar ist und mit diesem in Fluidkommunikation steht, wenn sie mit dem Reservoir (16) gekoppelt ist;
- ein Netz (19), das mit der Aufnahme (18) koppelbar und konfiguriert ist, um das zu perfundierende Organ (4) zu tragen; und
- eine Abdeckung (20), die an Scharnieren (21) an der Aufnahme (18) angelenkt ist und dazu konfiguriert ist, sich zwischen einer Öffnungsposition und einer Schließposition zu bewegen,
wobei das Netz (19) Folgendes umfasst:
- einen Umfangsabschnitt (29), der so geformt ist, dass er mit einem Umfangsabschnitt (22) der Aufnahme (18) koppelbar ist; und
- einen Stützabschnitt (30), der so konfiguriert ist, dass er das zu perfundierende Organ (4) abstützt, wenn das System (1) in Gebrauch ist,
wobei der Stützabschnitt (30) mit dem Reservoir (16) und der Aufnahme (18) ein Trennvolumen (V) definiert, das verhindert, dass das Organ (4) in die Perfusionsflüssigkeit (5) eintaucht, wenn das System (1) in Gebrauch ist,
wobei das Reservoir (16) eine Basis (16A), die konfiguriert ist, um den Behälter (3) an der elektromedizinischen Einheit (2) zu befestigen, und eine leitfähige Basis (16B) aufweist, die thermisch mit der Platte (7) gekoppelt ist, wobei die leitfähige Basis (16B) ferner konfiguriert ist, um die Perfusionsflüssigkeit (5) zu enthalten,
wobei die Thermoregulationsplatte (7) dazu ausgelegt ist, den Behälter (3) zu tragen und die im Behälter (3) enthaltene Perfusionsflüssigkeit (5) dank des Thermoregulationssystems (6) zu erwärmen oder zu kühlen, das dazu konfiguriert ist, die Perfusionsflüssigkeit (5) durch Wärmeleitung, die sich aus dem Kontakt zwischen der Thermoregulationsplatte (7) und der leitfähigen Basis (16B) des Reservoirs (16) ergibt, zu erwärmen oder zu kühlen,
wobei die Perfusionsflüssigkeit (5) so konfiguriert ist, dass sie durch die leitfähige Basis (16B) des Behälters (3) mittels Wärmeleitung durch die Thermoregulationsplatte (7) erwärmt oder gekühlt wird,
wobei das Thermoregulationssystem (6) ferner Folgendes umfasst:
eine Heizeinheit (72), die mit der Thermoregulationsplatte (7) verbunden und dazu konfiguriert ist, die Thermoregulationsplatte (7) als Funktion des mindestens einen ersten elektrischen Signals (Sᵣ) zu erwärmen, um die Perfusionsflüssigkeit (5) in dem Reservoir (16) zu erwärmen; und
eine Kühleinheit (37), die mit der Thermoregulationsplatte (7) verbunden und dazu konfiguriert ist, die Thermoregulationsplatte (7) als Funktion des mindestens einen zweiten elektrischen Signals (Sᵣ) zu kühlen, um die Perfusionsflüssigkeit (5) in dem Reservoir (16) zu kühlen,
wobei die Heizeinheit (72) eine Vielzahl von Widerständen umfasst, die in Reihe angeordnet sind.

2. Ex-vivo-Perfusionssystem (1) nach Anspruch 1, wobei das mindestens erste Signal (Sᵣ) so konfiguriert ist, dass es den Fluss eines Heizstroms (iᵣ) in der Vielzahl von Widerständen aktiviert oder deaktiviert.

3. Ex-vivo-Perfusionssystem (1) nach einem der vorhergehenden Ansprüche, wobei die Kühleinheit (37) Folgendes umfasst:
- einen Kompressor (38), der mit der Thermoregulationsplatte (7) gekoppelt und so konfiguriert ist, dass er ein Kühlgas komprimiert;
- einen Kondensator (39), der mit dem Kompressor (38) verbunden und so konfiguriert ist, dass er das Kühlgas kondensiert, um eine Kühlflüssigkeit zu erhalten; und
- einen Verdampfer (41), der mit dem Kompressor (38) und dem Kondensator (39) verbunden und so konfiguriert ist, dass er die Kühlflüssigkeit verdampft, um das Kühlgas zu erhalten.

4. Ex-vivo-Perfusionssystem (1) nach einem der vorhergehenden Ansprüche, wobei zumindest das zweite elektrische Signal (Sr) ein Modulationssignal ist, das die Regelung der Leistung der Kühleinheit (37) ermöglicht.

5. Ex-vivo-Perfusionssystem (1) nach dem vorhergehenden Anspruch, wobei zumindest das zweite elektrische Signal (Sr) die Regelung der Leistung der Kühleinheit um einen Prozentsatz zwischen 0 % und 100 % ermöglicht.

6. Ex-vivo-Perfusionssystem (1) nach einem der vorhergehenden Ansprüche, wobei das Thermoregulationssystem (6) ferner so konfiguriert ist, dass es die Temperatur der Thermoregulationsplatte (7) so reguliert, dass sie zwischen +4°C und +37°C liegt.

7. Ex-vivo-Perfusionssystem (1) nach einem der Ansprüche 1-6, wobei die Steuereinheit (9) ferner so konfiguriert ist, dass sie weitere erste elektrische Signale (Sᵣ) und/oder weitere zweite elektrische Signale (Sᵣ) erzeugt, wobei die Heizeinheit (72) so konfiguriert ist, dass sie die Thermoregulationsplatte (7) als Funktion der weiteren ersten elektrischen Signale (Sᵣ) erwärmt, wobei die Kühleinheit (37) so konfiguriert ist, dass sie die Thermoregulationsplatte (7) als Funktion der weiteren zweiten elektrischen Signale (Sᵣ) kühlt, wobei das Thermoregulationssystem (6) so konfiguriert ist, dass es die Temperatur der Thermoregulationsplatte (7) gemäß mindestens einem vordefinierten Thermoregulationsprofil reguliert, das durch die Steuereinheit (9) durch mindestens ein erstes und ein zweites elektrisches Signal (Sᵣ, Sf) und die weiteren ersten und zweiten elektrischen Signale (Sᵣ, Sf) eingestellt ist.

## Revendications

1. Système de perfusion ex vivo (1) d'un organe (4) comprenant :
- une unité de perfusion électromédicale (2) ;
- un récipient (3) couplé à l'unité de perfusion électromédicale (2) et conçu pour contenir l'organe (4) à perfuser avec un liquide de perfusion (5) ;
- une unité de commande (9) conçue pour générer au moins un premier signal électrique (Sᵣ) et au moins un second signal électrique (Sr) ; et
- un système de thermorégulation (6) comprenant une plaque de thermorégulation (7) ; et
dans lequel le système de thermorégulation (6) est couplé à l'unité de commande (9),
dans lequel le récipient (3) comprend :
- un réservoir (16), pouvant être couplé à la plaque de thermorégulation (7) et conçu pour contenir le liquide de perfusion (5) ; et
- une partie supérieure (17), couplée fluidiquement et physiquement au réservoir (16) et conçue pour contenir l'organe (4) à perfuser,
dans lequel la partie supérieure (17) comprend :
- un réceptacle (18), pouvant être couplé au réservoir (16) et en communication fluidique avec ce dernier lorsqu'il est couplé au réservoir (16) ;
- un filet (19), pouvant être couplé au réceptacle (18) et conçu pour transporter l'organe (4) à perfuser ; et
- un couvercle (20), articulé au réceptacle (18) par des charnières (21) et conçu pour se déplacer entre une position d'ouverture et une position de fermeture,
dans lequel le filet (19) comprend :
- une partie périphérique (29), formée de manière à pouvoir être couplée à une partie périphérique (22) du réceptacle (18) ; et
- une partie support (30), conçue pour soutenir l'organe (4) à perfuser lorsque le système (1) est en cours d'utilisation,
dans lequel la partie support (30) définit avec le réservoir (16) et le réceptacle (18) un volume de séparation (V) qui empêche l'organe (4) d'être immergé dans le liquide de perfusion (5) lorsque le système (1) est en cours d'utilisation,
dans lequel le réservoir (16) possède une base (16A), conçue pour fixer le récipient (3) à l'unité électromédicale (2), et une base conductrice (16B) couplée thermiquement à la plaque (7), ladite base conductrice (16B) étant en outre conçue pour contenir le liquide de perfusion (5),
dans lequel la plaque de thermorégulation (7) est conçue pour porter le récipient (3) et pour chauffer ou refroidir le liquide de perfusion (5) contenu dans le récipient (3) grâce au système de thermorégulation (6) conçu pour chauffer ou refroidir le liquide de perfusion (5) par conduction thermique dérivant du contact entre la plaque de thermorégulation (7) et la base conductrice (16B) du réservoir (16),
dans lequel le liquide de perfusion (5) est conçu pour être chauffé ou refroidi à travers la base conductrice (16B) du récipient (3) par conduction thermique au moyen de la plaque de thermorégulation (7),
le système de thermorégulation (6) comprend en outre :
une unité de chauffage (72) connectée à la plaque de thermorégulation (7) et conçue pour chauffer ladite plaque de thermorégulation (7) en fonction dudit au moins un premier signal électrique (Sᵣ) de manière à chauffer le liquide de perfusion (5) dans le réservoir (16) ; et
une unité de refroidissement (37) connectée à la plaque de thermorégulation (7) et conçue pour refroidir ladite plaque de thermorégulation (7) en fonction dudit au moins un second signal électrique (Sf) de manière à refroidir le liquide de perfusion (5) dans le réservoir (16),
dans lequel l'unité de chauffage (72) comprend plusieurs résistances disposées en série.

2. Système de perfusion ex vivo (1) selon la revendication 1, dans lequel ledit au moins premier signal (Sᵣ) est conçu pour activer ou désactiver le flux d'un courant de chauffage (iᵣ) dans ladite pluralité de résistances.

3. Système de perfusion ex vivo (1) selon l'une quelconque des revendications précédentes, dans lequel l'unité de refroidissement (37) comprend :
- un compresseur (38), couplé à la plaque de thermorégulation (7) et conçu pour comprimer un gaz de refroidissement ;
- un condenseur (39), connecté au compresseur (38), et conçu pour condenser le gaz de refroidissement afin d'obtenir un liquide de refroidissement ; et
- un évaporateur (41), connecté au compresseur (38) et au condenseur (39) et conçu pour évaporer le liquide de refroidissement afin d'obtenir le gaz de refroidissement.

4. Système de perfusion ex vivo (1) selon l'une quelconque des revendications précédentes, dans lequel au moins ledit second signal électrique (Sf) est un signal de modulation qui permet de réguler la puissance de l'unité de refroidissement (37).

5. Système de perfusion ex vivo (1) selon la revendication précédente, dans lequel au moins ledit second signal électrique (Sf) permet de réguler la puissance de l'unité de refroidissement d'un pourcentage compris entre 0 % et 100 %.

6. Système de perfusion ex vivo (1) selon l'une quelconque des revendications précédentes, dans lequel le système de thermorégulation (6) est en outre conçu pour réguler la température de la plaque de thermorégulation (7) de manière à ce qu'elle soit comprise entre +4 °C et +37 °C.

7. Système de perfusion ex vivo (1) selon l'une quelconque des revendications 1 à 6, dans lequel l'unité de commande (9) est en outre conçue pour générer d'autres premiers signaux électriques (Sᵣ) et/ou d'autres seconds signaux électriques (Sf), l'unité de chauffage (72) étant conçue pour chauffer ladite plaque de thermorégulation (7) en fonction desdits autres premiers signaux électriques (Sᵣ), l'unité de refroidissement (37) est conçue pour refroidir ladite plaque de thermorégulation (7) en fonction desdits autres seconds signaux électriques (Sf), le système de thermorégulation (6) étant conçu pour réguler la température de ladite plaque de thermorégulation (7) selon au moins un profil de thermorégulation prédéfini défini par ladite unité de commande (9) au moyen d'au moins un premier et un second signal électrique (Sᵣ, S_{f}) et desdits autres premiers et seconds signaux électriques (Sᵣ, S_{f}).
